(19) Europäisches Patentamt
European Patent Office
Office européen des brevets

(11) Veröffentlichungsnummer: **0 259 581**
**A2**

(12) # EUROPÄISCHE PATENTANMELDUNG

(21) Anmeldenummer: 87110521.9

(22) Anmeldetag: 21.07.87

(51) Int. Cl.[4]: D21H 3/02 , D21H 3/38 , C08F 220/56 , //(C08F220/56,226:06)

(30) Priorität: 01.08.86 DE 3626160

(43) Veröffentlichungstag der Anmeldung: 16.03.88 Patentblatt 88/11

(84) Benannte Vertragsstaaten: AT BE CH DE FR GB IT LI NL SE

(71) Anmelder: BASF Aktiengesellschaft
Carl-Bosch-Strasse 38
D-6700 Ludwigshafen(DE)

(72) Erfinder: Weberndoerfer, Volkmar, Dr.
Feldbergstrasse 48
D-6800 Mannheim 1(DE)
Erfinder: Freudenberg, Enrique, Dr.
Rene-Bohn-Strasse 4
D-6700 Ludwigshafen(DE)
Erfinder: Degen, Hans-Juergen, Dr.
Schillerstrasse 6
D-6143 Lorsch(DE)
Erfinder: Riebeling, Ulrich
Goerlitzer Strasse 39
D-6707 Schifferstadt(DE)

(54) **Leimungsmittel für Papier auf Basis von Fettalkyldiketenen und kationischen Polyacrylamiden und Terpolymerisate aus Acrylamid, N-Vinylimidazol und N-Vinylimidazolin.**

(57) Leimungsmittel für Papier auf Basis wäßriger Emulsionen von $C_{14}$-bis $C_{20}$-Alkyldiketenen und kationischen Copolymerisaten aus

a) 40 bis 99 Gew.% Acrylamid und/oder Methacrylamid,
b) 1 bis 40 Gew.% eines gegebenenfalls substituierten N-Vinylimidazolins und
c) 0 bis 30 Gew.% eines gegebenenfalls substituierten N-Vinylimidazols sowie Terpolymerisaten aus
a) 70 bis 96,5 Gew.% Acrylamid oder Methacrylamid,
b) 2 bis 20 Gew.% N-Vinylimidazolin oder N-Vinyl-2-methylimidazolin und
c) 1,5 bis 10 Gew.% N-Vinylimidazol mit einem K-Wert von 70 bis 250 (bestimmt nach H. Fikentscher in 0,5 %iger wäßriger Kochsalzlösung bei 20°C und einer Polymerkonzentration von 0,5 Gew.%).

EP 0 259 581 A2

# Leimungsmittel für Papier auf Basis von Fettalkyldiketenen und kationischen Polyacrylamiden und Terpolymerisate aus Acrylamid, N-Vinylimidazol und N-Vinylimidazolin

Aus der DE-PS 1 148 130 ist eine wäßrige Stärke-Ketendimer-Emulsion zum Leimen von Papier oder Papierstoff bekannt. Das Ketendimer ist mit Hilfe einer kationischen, aminmodifizierten Stärke in Wasser emulgiert. Papiere, die mit diesen Emulsionen in der Masse geleimt sind, entwickeln die volle Leimung nicht direkt nach dem Papiertrocknungsprozeß in der Papiermaschine sondern erst nach einer ein-oder mehrtägigen Lagerung der Papiere bei Raumtemperatur. In der Praxis werden jedoch Leimungsmittel gefordert, die ihre Leimungswirkung unmittelbar nach dem Trocknen des geleimten Papiers in der Papiermaschine praktisch vollständig ausbilden.

Aus der DE-OS 30 00 502 ist bekannt, wäßrige Emulsionen eines hydrophoben, gegenüber Cellulose reaktiven Leimstoffs, wie Fettalkyldiketen, in Mischung mit einem kationischen Polymerisat als Leimungsmittel zu verwenden. Als kationische Polymerisate kommen beispielsweise Umsetzungsprodukte von Epichlorhydrin mit einem Kondensat aus Dicyandiamid oder Cyanamid und einem Bisaminopropylpiperazin oder Kondensationsprodukte aus Epichlorhydrin und Bisaminopropylpiperazin in Betracht. Die kationischen Polymerisate bewirken eine beschleunigte Ausbildung der Leimung von Fettalkyldiketenen. Bei Papieren, die mit diesen Emulsionen geleimt sind, bildet sich die Leimung zwar schon innerhalb der Papiermaschine beim Trocknungsprozeß aus, jedoch wird die Papierweiße durch die in den Emulsionen enthaltenen kationischen Kondensationsprodukte nachteilig beeinflußt.

Aus der DE-OS 32 35 529 ist außerdem bekannt, daß eine Leimung von Papier bereits innerhalb der Papiermaschine mit Fettalkyldiketenen dadurch erreicht werden kann, daß man Mischungen aus Emulsionen von $C_{14}$-bis $C_{20}$-Dialkylketen und feinteiligen, stickstoffhaltigen Monomere einpolymerisiert enthanltenden polymeren Dispersionen als Masseleimungsmittel für Papier verwendet.

Aus der DE-OS 33 16 179 ist bekannt. Emulsionen von Fettalkyldiketenen und Polyethyleniminen und/oder speziellen wasserlöslichen Kondensationsprodukten auf Basis wasserlöslicher Polyamidoamine als Leimungsmittel für Papier zu verwenden. Auch bei diesen Leimungsmittelmischungen bildet sich die Diketenleimung innerhalb kurzer Zeit aus.

Die bisher verwendeten kationischen Leimungsbeschleuniger für Fettalkyldiketene reagieren jedoch sehr empfindlich auf Störstoffe, die sich beim Papierherstellungsprozeß in den Papierfabriken aufgrund der teilweise oder vollständig geschlossenen Wasserkreisläufe anreichern. Bei den Störstoffen handelt es sich z.B. um anionische Oligomere und Polymere. Dadurch kommt es zu einer Beeinträchtigung der Wirksamkeit der kationischen Produkte, so daß sich die Leimung nicht so schnell ausbildet bzw. die Menge an kationischem Leimungsbeschleuniger stark erhöht werden muß, um eine ebenso schnelle Leimungsausbildung zu erreichen, wie es mit einem Papierstoff möglich ist, der frei von Störstoffen ist.

Der vorliegenden Erfindung liegt die Aufgabe zugrunde, ein Mittel zur Beschleunigung der Leimungsausbildung von Fettalkyldiketenen zur Verfügung zu stellen, das weitgehend störstoffunabhängig ist und die Diketenleimung innerhalb der Papiermaschine während des Trocknungsvorgangs des Papiers auszubilden vermag. Eine andere Aufgabe der Erfindung ist es, neue Polymerisate zur Verfügung zu stellen, die die Masseleimung von Papier mit Alkyldiketenen beschleunigen und deren Wirksamkeit relativ unabhängig vom Störstoffgehalt des zu entwässernden Papierstoffs ist.

Die Aufgaben werden erfindungsgemäß gelöst mit einem Leimungsmittel für Papier auf Basis wäßriger Emulsionen von $C_{14}$-bis $C_{20}$-Alkyldiketenen und kationischen Polymerisaten, wenn man als kationische Polymerisate Copolymerisate aus

a) 40 bis 99 Gew.% Acrylamid und/oder Methacrylamid,

b) 1 bis 40 Gew.% eines gegebenenfalls substituierten N-Vinylimidazolins und

c) 0 bis 30 Gew.% eines gegebenenfalls substituierten N-Vinylimidazols eingesetzt werden, die einen K-Wert von 70 bis 150 (bestimmt nach H. Fikentscher in 5 %iger wäßriger Kochsalzlösung bei 20°C und einer Polymerkonzentration von 0,5 Gew.%) haben. Eine besonders rasche Ausbildung der Diketenleimung wird erreicht mit Terpolymerisaten aus

a) 70 bis 96,5 Gew.% Acrylamid oder Methacrylamid,

b) 2 bis 20 Gew.% N-Vinylimidazolin oder N-Vinyl-2-methylimidazolin und

c) 1,5 bis 10 Gew.% N-Vinylimidazol mit einem K-Wert von 70 bis 250.

Als Diketene verwendet man $C_{14}$-bis $C_{20}$-Alkyldiketene in emulgierter Form. Die Herstellung der Diketene sowie der Diketenemulsionen ist bekannt. Produkte dieser Art sind im Handel erhältlich. Die Diketene werden beispielsweise dadurch hergestellt, daß man aus den entsprechenden Fettsäurechloriden durch Umsetzung mit tertiären Aminen Salzsäure abspaltet. Technisch besonders wichtige Diketene werden aus Fettsäuren mit 14 bis 18 Kohlenstoffatomen erhalten. Besonders geeignet sind technische Fettsäuregemische, wie technische Stearinsäure, die vorwiegend aus Stearin-und Palmitinsäure besteht. Zur Herstellung von Emulsionen können die Diketene in bekannter Weise mit Hilfe von kationischer Stärke in Wasser emulgiert werden. Die Konzentration der $C_{14}$-bis $C_{20}$-Alkyldiketene in den wäßrigen Emulsionen beträgt 4 bis 12, vorzugsweise 6 bis 10 Gew.%. Die kationische Stärke wird in Mengen von 1 bis 3 Gew.%, bezogen auf die Emulsion, verwendet.

Die zur Beschleunigung der Leimungsausbildung einzusetzenden kationischen Polymerisate enthalten als Monomer der Gruppe a) 40 bis 99 Gew.% Acrylamid oder Methacrylamid oder auch Mischungen aus Acrylamid und Methacrylamid in jedem beliebigen Verhältnis. Als Monomer der Gruppe b) enthalten die kationischen Polymerisate 1 bis 40, vorzugsweise 2 bis 20 Gew.% eines gegebenenfalls substituierten N-Vinylimidazolins. Die Monomeren der Gruppe b) können beispielsweise mit Hilfe folgender Formel charakterisiert werden:

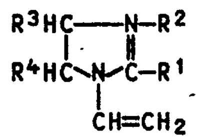 + $X^-$ (I),

in der

$R^1$ = H, $C_1$- bis $C_{18}$-Alkyl, 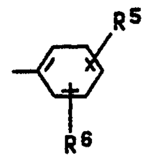

$R^5$, $R^6$ = H, $C_1$- bis $C_4$-Alkyl, Cl,

$R^2$ = H, $C_1$- bis $C_{18}$-Alkyl, 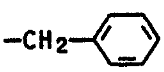, 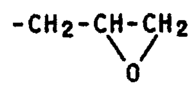

$R^3$, $R^4$ = H, $C_1$- bis $C_4$-Alkyl, und

$X^-$ ein Säurerest bedeutet.

Vorzugsweise setzt man bei der Polymerisation 1-Vinyl-2-imidazolin-Salze der Formel II ein

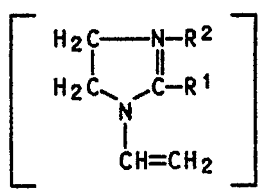 + $X^-$ (II),

in der

$R^1$ = H, $CH_3$, $C_2H_5$, n-und i-$C_3H_7$, $C_6H_5$ und

$X^-$ ein Säurerest ist. $X^-$ steht vorzugsweise für $Cl^-$, $Br^-$, $SO_4^{2-}$, $CH_3O\text{-}SO_3H^-$, $C_2H_5\text{-}O\text{-}SO_3H^-$, $R^1\text{-}COO^-$ und

$R^2$ = H, $C_1$-bis $C_4$-Alkyl und Aryl.

Der Substituent $X^-$ in den Formeln I und II kann prinzipiell jeder beliebige Säurerest einer anorganischen oder einer organischen Säure sein. Die Monomeren der Formel I werden erhalten, indem man die freie Base, d.h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toluolsulfonsäure neutralisiert werden. Außer Salzen von 1-Vinyl-2-imidazolinen kommen auch quaternisierte 1-Vinyl-2-imidazoline in Betracht. Sie werden hergestellt, indem man 1-Vinyl-2-imidazoline, die gegebenenfalls in 2-, 4-und 5-Stellung substituiert sein können, mit bekannten Quaternisierungsmitteln umsetzt. Als Quaternisierungsmittel kommen beispielsweise $C_1$-bis $C_{18}$-Alkylchloride oder -bromide, Benzylchlorid, Benzylbromid, Epichlorhydrin, Dimethylsulfat und Diethylsulfat in Betracht. Als Quaternisierungsmittel verwendet man vorzugsweise Epichlorhydrin, Benzylchlorid, Dimethylsulfat und Methylchlorid.

Von den Monomeren der Gruppe b) verwendet man vorzugsweise N-Vinylimidazolin oder N-Vinyl-2-methylimidazolin. Die Monomeren der Gruppe b) sind zu 1 bis 40, vorzugsweise 2 bis 20 Gew.% am Aufbau der Copolymerisate beteiligt.

Als Monomere der Gruppe c) werden N-Vinylimidazole eingesetzt. Verbindungen dieser Gruppe können beispielsweise mit Hilfe folgender Formel charakterisiert werden:

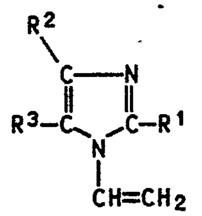

(III),

in der $R^1$, $R^2$ und $R^3$ = H, $CH_3$ und $R^1$ außerdem noch $C_2H_5$, $C_3H_7$ und $C_4H_9$ sein kann.

Vorzugsweise verwendet man als Monomer der Gruppe c) das unsubstituierte N-Vinylimidazol. Die Summe der Prozentangaben für die einpolymerisierten Monomeren (a) bis (c) beträgt bei den Copolymerisaten immer 100.

Terpolymerisate aus a) 70 bis 96,5 Gew.% Acrylamid oder Methacrylamid, b) 2 bis 20 Gew.% N-Vinylimidazolin oder N-Vinyl-2-methylimidazolin und c) 1,5 bis 10 Gew.% N-Vinylimidazol mit einem K-Wert von 70 bis 250 (bestimmt nach H. Fikentscher in 0,5 %iger wäßriger Kochsalzlösung bei 20°C und einer Polymerkonzentration von 0,5 Gew.%) sind neue Stoffe und werden für die Beschleunigung der Diketenleimung in einem Papierstoff, der Störstoffe enthält, bevorzugt eingesetzt. Für ein solches Papierstoffsystem wird ebenfalls eine vorteilhafte Wirkung mit Copolymerisaten aus a) 40 bis 99 Gew.% Acrylamid und/oder Methacrylamid, b) 1 bis 40 Gew.% eines gegebenenfalls substituierten N-Vinylimidazolins und c) 0 bis 30 Gew.% eines gegebenenfalls substituierten N-Vinylimidazols erzielt, wenn man Copolymerisate einsetzt, die einen K-Wert von 70 bis 150 haben. Bei den Copolymerisaten beträgt die Summe der Prozentangaben für (a) bis (c) immer 100. Die kationischen Copolymerisate sind in Wasser löslich. Sie werden in Form einer Mischung mit dem Alkyldiketen dem zu entwässernden Papierstoff zugefügt. Alkyldiketen und kationisches Copolymerisat können jedoch auch dem Papierstoff getrennt voneinander zugesetzt werden. Da im Papierstoff eine innige Vermischung der Bestandteile erfolgt, vollzieht sich die Papierleimung mit Alkyldiketen immer in Gegenwart des erfindungsgemäß zu verwendenden kationischen Copolymerisats. Bei dieser Arbeitsweise ist es gleichgültig, ob das Fettalkyldiketen zuerst zum Papierstoff oder das kationische Copolymerisat dem Papierstoff als erster Bestandteil des Leimungsmittelgemisches zugesetzt wird. Bezogen auf 100 Gew.-Teile Alkyldiketen verwendet man 20 bis 200 Gew.-Teile der erfindungsgemäß einzusetzenden Copolymerisate.

Die Copolymerisate werden durch Copolymerisieren der Monomeren a), b) und gegebenenfalls c) bei Temperaturen bis zu 100°C in Gegenwart von freie Radikale liefernden Polymerisationsinitiatoren oder durch Einwirkung energiereicher Strahlen hergestellt. Die Copolymerisation kann nach den hierfür bekannten Verfahren vorgenommen werden. Da wäßrige Lösungen der Copolymerisate verwendet werden, ist es für die Anwendung der Copolymerisate am einfachsten, sie durch Copolymerisieren der Monomeren in wäßriger Lösung herzustellen. Weitere Möglichkeiten zur Herstellung der Polymerisate bestehen darin, daß man die Copolymerisation in einer Wasser-in-Öl-Emulsion oder nach dem Verfahren der umgekehrten Suspensionspolymerisation durchführt. Bei dem zuletzt genannten Verfahren erhält man feinteilige perlförmige Polymerisate, die leicht in reiner Form zu isolieren sind. Sowohl nach dem Verfahren der Wasser-in-Öl-Emulsionspolymerisation als auch nach dem Verfahren der umgekehrten Suspensionspolymerisation ist es möglich, Copolymerisate eines sehr hohen Molekulargewichts herzustellen, d.h. Polymerisate mit K-Werten bis zu 250. Polymerisate mit niedrigeren Molekulargewichten, d.h. mit K-Werten im Bereich von 70 bis 150, werden dadurch hergestellt, daß man die Polymerisation in Gegenwart der üblichen Polymerisationsregler durchführt. Geeignete Polymerisationsregler sind beispielsweise $C_1$-bis $C_4$-Alkohole, Mercaptane wie Dodecylmercaptan, 2-Mercaptoethanol und Thioglykolsäure. Die genannten Polymerisationsverfahren können diskontinuierlich, halbkontinuierlich oder auch kontinuierlich durchgeführt werden.

Als Polymerisationsinitiatoren werden vorzugsweise wasserlösliche, freie Radikale liefernde Verbindungen eingesetzt, z.B. Wasserstoffperoxid, Alkalimetallperoxidisulfate, sowie wasserlösliche organische Peroxide, Hydroperoxide und Azoverbindungen, z.B. 2,2'-Azobis-(2-amidinopropan)-dihydrochlorid, 2,2'-Azobis-(N,N'-dimethylenisobutyramidin)-dihydrochlorid und 2,2'-Azobis(2,4-dimethylvaleronitril). Man kann sowohl

Mischungen von Polymerisationsinitiatoren verwenden als auch die sogenannten Redox-Katalysatoren einsetzen, z.B. Natriumsulfit/Ammoniumpersulfat/Natriumbromat, Natriumsulfit/Ascorbinsäure/Kaliumperoxidisulfat, Wasserstoffperoxid/Eisen-II-salze oder Kaliumperoxidisulfat/Eisen-II-salze.

Die in den Beispielen angegebenen Teile sind Gew.-Teile. Die Angaben in Prozent beziehen sich auf das Gewicht der Stoffe. Die K-Werte wurden nach H. Fikentscher, Cellulosechemie Band 13, 48-64 und 71-74 (1932) in 5 %iger wäßriger Kochsalzlösung bei einer Temperatur von 20°C und einer Polymerkonzentration von 0,5 Gew.% bestimmt. Die Leimungsgüte wurde mit Hilfe des Cobb-Wertes nach DIN 53 132 und der Tintenschwimmdauer bis zum 50 %igen Durchschlag ermittelt. Die Untersuchungen wurden jeweils sofort nach der Blattbildung und nach 3tägigem Klimatisieren der Blätter durchgeführt. Folgende Leimungsmittel wurden verwendet:

Leimungsmittel 1 (Vergleich 1)

6 %ige wäßrige Emulsion von Distearyldiketen, stabilisiert mit 2 % handelsüblicher kationischer Stärke.

Leimungsmittel 2 (Vergleich 2 gemäß DE-OS 33 16 179)

Mischung aus 6 %iger wäßriger Distearyldiketenemulsion, 2 % handelsüblicher kationischer Stärke und 10 % eines wasserlöslichen Kondensationsproduktes aus Adipinsäure und Diethylentriamin, das mit 50 Gew.-Teilen Ethylenimin, bezogen auf 100 Gew.-Teile Polyamidoamin gepfropft und mit einem difunktionellen Vernetzer umgesetzt ist, der durch Reaktion von Epichlorhydrin mit 34 Ethylenoxideinheiten enthaltendem Polyethylenglykol erhältlich ist.

Leimungsmittel 3 (gemäß Erfindung)

Mischung aus 6 %iger wäßriger Distearyldiketenemulsion, 2 % handelsüblicher kationischer Stärke und 10 % des im Beispiel 1 beschriebenen Terpolymerisates aus 85,8 % Acrylamid, 11,1 % N-Vinyl-2-methylimidazolin und 3,1 % N-Vinylimidazol vom K-Wert 116.

Leimungsmittel 4 (gemäß Erfindung)

Mischung aus 6 %iger wäßriger Stearyldiketenemulsion, 2 % handelsüblicher kationischer Stärke und 10 % eines Copolymerisates aus 81,5 % Acrylamid und 18,5 % N-Vinyl-2-methylimidazolin.

Beispiel 1

Herstellung eines Terpolymerisates aus 85,8 % Acrylamid, 11,1 % N-Vinyl-2-methylimidazolin und 3,1 % N-Vinylimidazol

In einem 2 l-fassenden Dreihalskolben, der mit Rührer, Rückflußkühler, Tropftrichter und einer Vorrichtung für das Arbeiten unter Stickstoff ausgestattet ist, werden 708,5 Teile Wasser, 15 Teile Natriumacetat, 1,7 Teile des Pentanatriumsalzes der Diethylentriaminpentaessigsäure, 20 Teile einer 1 %igen wäßrigen Natriumbromatlösung, 6,7 Teile konzentrierte Schwefelsäure, 173,2 Teile einer 50 %igen wäßrigen Acrylamidlösung und 2,87 Teile N-Vinylimidazol vorgelegt und bei einer Temperatur von 18 bis 23°C mit 10,06 Teilen N-Vinyl-2-methylimidazolin versetzt. Um den restlichen Sauerstoff aus der vorgelegten Mischung zu entfernen, leitet man Stickstoff hindurch. Nach etwa 10 min gibt man dann innerhalb von 25 min eine Lösung von 0,2 Teilen Natriumbisulfit in 60 Teilen Wasser gleichmäßig zu. 2 Stunden nach Zugabe des Reduktionsmittels ist die Polymerisation, die bei einer Temperatur von 18 bis 23°C abläuft, wobei man die Wärme durch Kühlen mit einem Wasserbad entfernt, zu Ende. Man erhält eine 10 %ige wäßrige Lösung eines Copolymerisates, das einen K-Wert von 116 hat.

Beispiel 2

Man stellt einen Papierstoff aus 100 % gebleichtem Birkensulfat-Zellstoff unter Zusatz von 40 % Kreide her. Der Mahlgrad beträgt 35° SR (Schopper-Riegler). Dieser Papierstoff wird in 3 Teile geteilt, die jeweils mit Substanzen versetzt werden, die in der Praxis bei geschlossenen Wasserkreisläufen von Papiermaschinen vorkommen und die die Leimung stören:

a) Holzextrakt
b) Polyacrylsäure eines K-Wertes von 25 (wird als Dispergiermittel verwendet)
c) anionische Stärke.

Zu diesen drei Stoffmodellen a), b) und c) gibt man dann die jeweils in den Tabellen 1 bis 3 angegebenen Leimungsmittel und bildet auf einem Rapid-Köthen-Blattbildner nach Hinzufügen von 0,3 % eines handelsüblichen schwach kationischen Polyacrylamids vom K-Wert 130 als Retentionsmittel Blätter eines Flächengewichts von 100 g/m². Die Blätter werden auf einem mit Dampf beheizten Trockenzylinder bei 90°C bis zu einer Restfeuchte von 6 bis 10 % getrocknet. Unmittelbar nach dem Trocknen wird die Präparationsaufnahme, der Cobb-Wert und die Tintenschwimmzeit bestimmt. Die Blätter werden dann 3 Tage bei 23°C in einer relativen Luftfeuchte von 50 % gelagert. Man bestimmt danach jeweils den Cobb-Wert und die Tintenschwimmzeit. Die dabei erhältlichen Daten sind ebenfalls in den Tabellen 1 bis 3 für die Stoffmodelle a) bis c) angegeben.

Tabelle 1

a) Zusatz von 50 ml Holzextrakt (Ligninabbauprodukte) zu 600 ml Papierstoff

| Leimungsmittel | 1<br>Vergleich 1 | 2<br>Vergleich 2 | 4<br>Beispiel gemäß Erfindung |
|---|---|---|---|
| Zusatzmenge, % fest | | | |
| davon % Diketen | 0,12 | 0,12 | 0,12 |
| davon % kat.Polymer | - | - | 0,2 |
| davon % vernetztes Polyamidoamin | - | 0,2 | - |
| Leimung sofort | | | |
| Wasseraufnahme | | | |
| Leimpresse g/m² | 65 | 40 | 25 |
| $Cobb_{60}$, g/m² | > 200 | 100 | 35 |
| 50 % Tintendurchschlag, min | - | 2 | 10 |
| Leimung nach 3-tägigem Klimatisieren | | | |
| $Cobb_{60}$, g/m² | 27 | 40 | 23 |
| 50 % Tintendurchschlag, min | 37 | 23 | > 60 |

Tabelle 2

b) Zusatz von 0,2 % Polyacrylsäure vom K-Wert 25 als Störstoff zum Papierstoff

| Leimungsmittel | 1<br>Vergleich 3 | 2<br>Vergleich 4 | 4<br>Beispiel gemäß Erfindung |
|---|---|---|---|
| Zusatzmenge, % fest | 0,16 | 0,36 | 0,36 |
| davon % Diketen | 0,12 | 0,12 | 0,12 |
| davon % kat.Polymer | - | - | 0,2 |
| davon % vernetztes Polyamidoamin | - | 0,2 | - |
| Leimung sofort | | | |
| Wasseraufnahme | | | |
| Leimpresse $g/m^2$ | 55 | 37 | 22 |
| $Cobb_{60}$, $g/m^2$ | 136 | 83 | 45 |
| 50 % Tintendurchschlag, min | 1 | 4 | 20 |
| Leimung nach 3-tägigem Klimatisieren | | | |
| $Cobb_{60}$, $g/m^2$ | 40 | 51 | 25 |
| 50 % Tintendurchschlag, min | 60 | 10 | > 60 |

Tabelle 3

c) Zusatz von 15 % anionischer Stärke als Störstoff zum Papierstoff

| Leimungsmittel | 1<br>Vergleich 5 | 2<br>Vergleich 6 | 3<br>Beispiel gemäß Erfindung |
|---|---|---|---|
| Zusatzmenge, % fest | 0,16 | 0,36 | 0,36 |
| davon % Diketen | 0,12 | 0,12 | 0,12 |
| davon % kat.Polymer | - | - | 0,2 |
| davon % vernetztes Polyamidoamin | - | 0,2 | - |
| Leimung sofort | | | |
| Wasseraufnahme | | | |
| Leimpresse g/m² | 40 | 36 | 20 |
| $Cobb_{60}$, g/m² | 135 | 74 | 35 |
| 50 % Tintendurchschlag, min | - | 15 | 38 |
| Leimung nach 3-tägigem Klimatisieren | | | |
| $Cobb_{60}$, g/m² | 26 | 50 | 25 |
| 50 % Tintendurchschlag, min | 50 | 20 | > 60 |

Beispiel 3

Man stellt einen Papierstoff aus 100 % gebleichtem Birkensulfat-Zellstoff unter Zusatz von 40 % Kreide her. Der Mahlgrad beträgt 35° SR (Schopper-Riegler). Der Papierstoff hat einen pH-Wert von 7,5 und eine Stoffdichte von 0,8 %. Dieser Papierstoff wird in drei gleiche Teile geteilt, die jeweils mit den unter a) bis c) angegebenen Produkten versetzt werden. Diese Produkte sind in der Praxis als Störstoffe bekannt, weil sie die Diketenleimung nachteilig beeinflussen. Folgende Störstoffe wurden verwendet:

a) Holzextrakt
b) Polyacrylsäure eines K-Werts von 25
c) anionische Stärke.

Zu diesen drei Stoffmodellen wurden dann jeweils die in den Tabellen 4 bis 6 angegebenen Leimungsmittel zugesetzt und mit dem Papierstoff innig vermischt. Dann fügt man 0,3 % eines handelsüblichen schwach kationischen Polyacrylamids als Retentionsmittel zu und stellt mit Hilfe eines Rapid-Köten-Blattbildners Papierblätter vom Flächengewicht 100 g/m² her. Die Papierblätter werden auf einem mit Dampf beheizten Trockenzylinder bei 90°C bis zu einer Restfeuchte von 6 bis 10 % getrocknet. Unmittelbar im Anschluß daran werden die Präparationsaufnahme, der Cobb-Wert und die Tintenschwimmzeit dieser Papierblätter bestimmt. Die dabei erhältlichen Daten sowie die Cobb-Werte und Tintenschwimmzeiten von Blättern, die drei Tage bei 23°C und einer relativen Luftfeuchtigkeit von 50 % klimatisiert werden, sind ebenfalls in den Tabellen 4 bis 6 angegeben.

Tabelle 4

a) Zusatz von 50 ml Holzextrakt (Ligninabbauprodukte) zu 550 ml Papierstoff

| Leimungsmittel | 1<br>Vergleich 7 | 2<br>Vergleich 8 | 3<br>Beispiel gemäß Erfindung |
|---|---|---|---|
| Zusatzmenge, % fest | 0,16 | 0,36 | 0,36 |
| davon % Diketen | 0,12 | 0,12 | 0,12 |
| davon % kat.Polymer | - | - | 0,2 |
| davon % vernetztes Polyamidoamin | - | 0,2 | - |
| Leimung sofort | | | |
| Wasseraufnahme | | | |
| Leimpresse g/m$^2$ | 85 | 70 | 27 |
| $Cobb_{60}$, g/m$^2$ | 200 | 150 | 52 |
| 50 % Tintendurchschlag, min | - | 0,2 | 11 |
| Leimung nach 3-tägigem Klimatisieren | | | |
| $Cobb_{60}$, g/m$^2$ | 40 | 55 | 40 |
| 50 % Tintendurchschlag, min | > 60 | 25 | > 60 |

Tabelle 5

b) Zusatz von 0,2 % Polyacrylsäure vom K-Wert 25 als Störstoff zum Papierstoff

| Leimungsmittel | 1<br>Vergleich 9 | 2<br>Vergleich 10 | 3<br>Beispiel gemäß Erfindung |
|---|---|---|---|
| Zusatzmenge, % fest | 0,16 | 0,36 | 0,36 |
| davon % Diketen | 0,12 | 0,12 | 0,12 |
| davon % kat.Polymer | - | - | 0,2 |
| davon % vernetztes Polyamidoamin | - | 0,2 | - |
| Leimung sofort | | | |
| Wasseraufnahme | | | |
| Leimpresse $g/m^2$ | 48 | 38 | 24 |
| $Cobb_{60}$, $g/m^2$ | 150 | 85 | 36 |
| 50 % Tintendurchschlag, min | - | 1 | 30 |
| Leimung nach 3-tägigem Klimatisieren | | | |
| $Cobb_{60}$, $g/m^2$ | 40 | 72 | 40 |
| 50 % Tintendurchschlag, min | 60 | 10 | > 60 |

Tabelle 6

c) Zusatz von 15 % anionischer Stärke als Störstoff zum Papierstoff

| Leimungsmittel | 1<br>Vergleich 11 | 2<br>Vergleich 12 | 3<br>Beispiel gemäß Erfindung |
|---|---|---|---|
| Zusatzmenge, % fest | 0,16 | 0,36 | 0,36 |
| davon % Diketen | 0,12 | 0,12 | 0,12 |
| davon % kat.Polymer | - | - | 0,2 |
| davon % vernetztes Polyamidoamin | - | 0,2 | - |
| Leimung sofort | | | |
| Wasseraufnahme | | | |
| Leimpresse g/m² | 50 | 35 | 19 |
| $Cobb_{60}$, g/m² | 67 | 70 | 41 |
| 50 % Tintendurchschlag, min | 1 | 10 | 20 |
| Leimung nach 3-tägigem Klimatisieren | | | |
| $Cobb_{60}$, g/m² | 42 | 57 | 40 |
| 50 % Tintendurchschlag, min | > 60 | > 60 | > 60 |

Wie aus den Tabellen ersichtlich ist, ist es durch Zusatz der erfindungsgemäß zu verwendenden kationischen Copolymerisate möglich, eine Leimung mit Alkyldiketenen unmittelbar nach dem Trocknen der Papierblätter auszubilden, wobei gegenüber den bekannten Leimungsbeschleunigern für Fettalkyldiketene der Vorteil erzielt wird, daß im System anwesende Störstoffe die Ausbildung der Leimungswirkung praktisch nicht nachteilig beeinflussen. Dieser Sachverhalt tritt besonders deutlich hervor, wenn man die Werte für die Wasseraufnahme des Papiers und den Cobb-Wert von erfindungsgemäß hergestellten Blättern mit den Blättern vergleicht, die mit Hilfe des Leimungsmittels 2 geleimt werden.

**Ansprüche**

1. Leimungsmittel für Papier auf Basis wäßriger Emulsionen von $C_{14}$-bis $C_{20}$-Alkyldiketenen und kationischen Polymerisaten, dadurch gekennzeichnet, daß als kationische Polymerisate Copolymerisate aus

a) 40 bis 99 Gew.% Acrylamid und/oder Methacrylamid,

b) 1 bis 40 Gew.% eines gegebenenfalls substituierten N-Vinylimidazolins und

c) 0 bis 30 Gew.% eines gegebenenfalls substituierten N-Vinylimidazols

eingesetzt werden, die einen K-Wert von 70 bis 150 (bestimmt nach H. Fikentscher in 5 %iger wäßriger Kochsalzlösung bei 20°C und einer Polymerkonzentration von 0,5 Gew.%) haben.

2. Leimungsmittel nach Anspruch 1, dadurch gekennzeichnet, daß als kationische Polymerisate Terpolymerisate aus

a) 40 bis 96,5 Gew.% Acrylamid oder Methacrylamid,

b) 2 bis 30 Gew.% N-Vinylimidazolin oder N-Vinyl-2-methylimidazolin und

c) 1,5 bis 30 Gew.% eines gegebenenfalls substituierten N-Vinylimidazols

eingesetzt werden.

3. Leimungsmittel nach Anspruch 1, dadurch gekennzeichnet, daß als kationische Polymerisate Terpolymerisate aus

a) 70 bis 96,5 Gew.% Acrylamid,

b) 2 bis 20 Gew.% N-Vinylimidazolin oder N-Vinyl-2-methylimidazolin und

c) 1,5 bis 10 Gew.% N-Vinylimidazol

eingesetzt werden.

4. Verwendung von Copolymerisaten aus

a) 40 bis 99 Gew.% Acrylamid und/oder Methacrylamid,

b) 1 bis 40 Gew.% eines gegebenenfalls substituierten N-Vinylimidazolins und

c) 0 bis 30 Gew.% eines gegebenenfalls substituierten N-Vinylimidazols,

die einen K-Wert von 70 bis 150 (bestimmt nach H. Fikentscher in 5 %iger wäßriger Kochsalzlösung bei 20°C und einer Polymerkonzentration von 0,5 Gew.%) haben, zusammen mit wäßrigen Emulsionen von $C_{14}$-bis $C_{20}$-Alkyldiketenen als Masseleimungsmittel bei der Herstellung von Papier.

5. Terpolymerisate aus

a) 70 bis 96,5 Gew.% Acrylamid oder Methacrylamid,

b) 2 bis 20 Gew.% N-Vinylimidazolin oder N-Vinyl-2-methylimidazolin und

c) 1,5 bis 10 Gew.% N-Vinylimidazol

mit einem K-Wert von 70 bis 250 (bestimmt nach H. Fikentscher in 5 %iger wäßriger Kochsalzlösung bei 20°C und einer Polymerkonzentration von 0,5 Gew.%).